# EUROPEAN PATENT APPLICATION

(11) **EP 4 563 542 A1**
(43) Date of publication of application: **04.06.2025**
(21) Application number: 23846340.0
(22) Date of filing: 20.07.2023
(51) Int. Cl.: C03B 37/12, B65H 54/02, B65H 54/28

(54) **GLASS WOUND BODY AND MANUFACTURING METHOD FOR SAME, AND METHOD FOR MANUFACTURING COMPOSITE MATERIAL**

(30) Priority: 28.07.2022 JP 2022120416; 22.11.2022 JP 2022186307
(71) Applicant: Nippon Electric Glass Co., Ltd., Otsu-shi, Shiga 520-8639 (JP)
(72) Inventor: KINEMURA, Takashi, Otsu-shi, Shiga 520-8639 (JP)
(74) Representative: Tetzner, Michael
(86) International application number: PCT/JP2023/026517
(87) International publication number: WO 2024/024609

(57) **Abstract**

Provided is a glass wound body having excellent productivity and handleability. A glass wound body 1 is formed by a single glass strand 2 being wound up about an axis of rotation Z, wherein where, in a range in which glass filaments constituting the glass strand 2 have a diameter of 28 µm or less, a count of the glass strand 2 is represented by X tex and a diameter of the glass filaments is represented by Y µm, X/Y² > 8 is satisfied, wherein where, as viewed from a direction of the axis of rotation, an angle formed between a line connecting the axis of rotation Z and a starting point of winding of the glass strand 2 and a line connecting the axis of rotation Z and a point where the glass strand 2 is located after start of the winding is represented by θ, where a single travel of the glass strand 2 for a distance of a line connecting both ends of the glass wound body 1 in the direction of the axis of rotation is referred to as a one-way travel, and where, during traveling of the glass strand 2 from the starting point of winding to a first return point at which the angle θ reaches 0°, a number of the one-way travels of the glass strand 2 is represented by T and a number of rotations of the glass strand 2 about the axis of rotation Z is represented by N, 2.0 ≤ N/T ≤ 5.5 is satisfied.

## Description

### [Technical Field]

The present invention relates to glass wound bodies formed by a single glass strand being wound up about an axis of rotation, methods for manufacturing the glass wound body, and methods for manufacturing a composite material using the glass wound body.

### [Background Art]

A glass direct roving (DR) is known as a glass wound body formed by directly winding up a glass strand which is a bound bundle of a plurality of glass filaments. A glass strand drawn from the glass direct roving can be easily formed into a composite material together with resin by the pultrusion method, the filament winding method or so on and is therefore widely used as reinforcing fibers for resin.

In a method for manufacturing a glass wound body, for example, molten glass is drawn into filaments from a fiber forming apparatus, a sizing agent is applied to the surfaces of hundreds to thousands of drawn glass filaments with an applicator, and the glass filaments are bound together into a bundle, thus forming a glass strand. Next, the obtained bound bundle is wound up on a rotating collet while being traversed back and forth, and dried to form a film, thus producing a glass wound body (see, for example, Patent Literature 1).

### [Citation List]

### [Patent Literature]

[PTL 1]
JP-A-2021-100904

### [Summary of Invention]

### [Technical Problem]

As a glass wound body, there is known an assembled roving formed by a plurality of glass strands being assembled together. However, compared to a glass wound body (a single end roving) formed of a single glass strand, the assembled roving is poorer in productivity and tends to be higher in production cost by the necessity for the strand assembling step. For this reason, in view of the above problems with productivity and production cost, there is demand for a glass wound body formed of a single glass strand which is thick.

Nevertheless, if it is sought to produce a glass wound body in which the glass strand has a large thickness, there arises a problem of difficulty in winding up the glass strand in a desired shape, such as a square-end cheese shape. Furthermore, there is a problem of the obtained glass wound body being easily collapsed in shape. In addition, in reeling the glass strand out of the obtained glass wound body, there arises a problem of difficulty in unwinding the glass wound body from the inner layers thereof.

The method for manufacturing a glass wound body disclosed in Patent Literature 1 does not take into consideration any glass wound body in which the glass strand has a large thickness, and, therefore, have a problem in that, in winding up a thick glass strand, the productivity and handleability thereof may not be sufficiently increased.

An object of the present invention is to provide a glass wound body having excellent productivity and handleability, a method for manufacturing the glass wound body, and a method for manufacturing a composite material using the glass wound body.

### [Solution to Problem]

A glass wound body according to the present invention is a glass wound body formed by a single glass strand being wound up about an axis of rotation, wherein where, in a range in which glass filaments constituting the glass strand have a diameter of 28 µm or less, a count of the glass strand is represented by X tex and a diameter of the glass filaments is represented by Y µm, X/Y² > 8 is satisfied, wherein where, as viewed from a direction of the axis of rotation, an angle formed between a line connecting the axis of rotation and a starting point of winding of the glass strand and a line connecting the axis of rotation and a point where the glass strand is located after start of the winding is represented by θ, where a single travel of the glass strand for a distance of a line connecting both ends of the glass wound body in the direction of the axis of rotation is referred to as a one-way travel, and where, during traveling of the glass strand from the starting point of winding to a first return point at which the angle θ reaches 0°, a number of the one-way travels of the glass strand is represented by T and a number of rotations of the glass strand about the axis of rotation is represented by N, 2.0 ≤ N/T ≤ 5.5 is satisfied.

In the present invention, where a height of the glass wound body in the direction of the axis of rotation is represented by H mm and a strand width of the glass strand is represented by W mm, H ≥ W × N is preferably satisfied.

In the present invention, the diameter of the glass filaments is preferably not less than 17 µm and not more than 28 µm. In this case, 2.0 ≤ N/T ≤ 4.0 is preferably satisfied.

In the present invention, the count of the glass strand is preferably not less than 3000 tex and not more than 14000 tex. In this case, 2.0 ≤ N/T ≤ 4.0 is preferably satisfied.

A method for manufacturing a glass wound body according to the present invention is a method for manufacturing a glass wound body formed by a single glass strand being wound up about an axis of rotation and includes the steps of: applying a sizing agent to surfaces of a plurality of glass filaments to bundle the plurality of glass filament together and thus form a glass strand; winding up the glass strand while traversing the glass strand by moving the glass strand back and forth in a direction of extension of the axis of rotation and thus making a wound package; and drying the sizing agent to form a film on the surfaces of the glass filaments, wherein where, in a range in which the glass filaments constituting the glass strand have a diameter of 28 µm or less, a count of the glass strand is represented by X tex and a diameter of the glass filaments is represented by Y µm, X/Y² > 8 is satisfied, and wherein in the step of making the wound package, where, as viewed from the direction of the axis of rotation, an angle formed between a line connecting the axis of rotation and a starting point of winding of the glass strand and a line connecting the axis of rotation and a point where the glass strand is located after start of the winding is represented by θ, where a single travel of the glass strand for a distance of a line connecting both ends of the glass wound body in the direction of the axis of rotation is referred to as a one-way travel, and where, during traveling of the glass strand from the starting point of winding to a first return point at which the angle θ reaches 0°, a number of the one-way travels of the glass strand is represented by T and a number of rotations of the glass strand about the axis of rotation is represented by N, the glass strand is wound up to satisfy 2.0 ≤ N/T ≤ 5.5.

A method for manufacturing a composite material according to the present invention is a method for manufacturing a composite material of the glass strand and a resin using the glass wound body and includes the steps of: impregnating the glass strand drawn from the glass wound body with a resin to obtain a resin-impregnated glass strand; and cutting the resin-impregnated glass strand.

### [Advantageous Effects of Invention]

The present invention enables provision of a glass wound body having excellent productivity and handleability, a method for manufacturing the glass wound body, and a method for manufacturing a composite material using the glass wound body.

### [Brief Description of Drawings]

[Fig. 1]

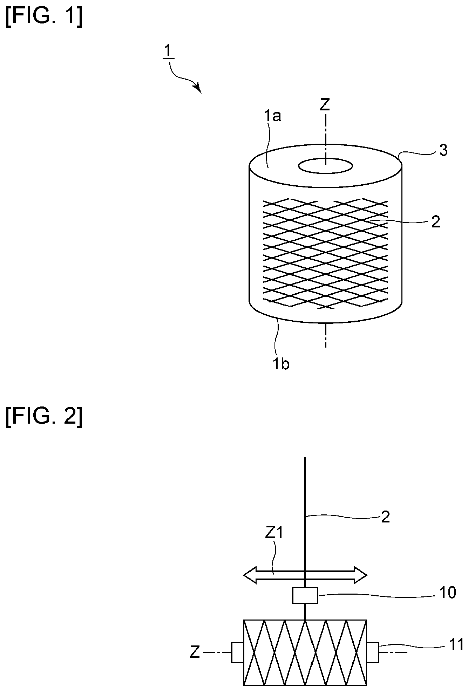

   Fig. 1 is a schematic perspective view showing a glass wound body according to one embodiment of the present invention.
[Fig. 2]
   Fig. 2 is a schematic view for illustrating a method for winding up a glass strand.
[Fig. 3]

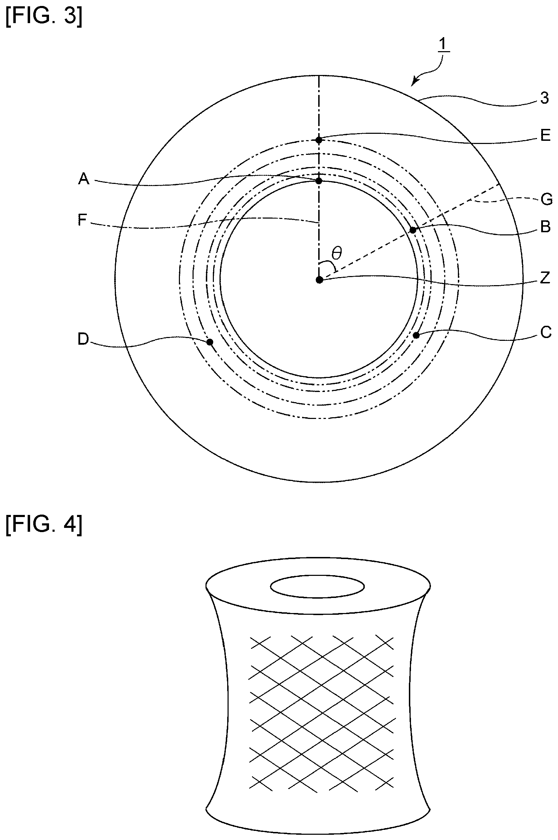

   Fig. 3 is a schematic plan view for illustrating the wind order and the number of aligned glass strands.
[Fig. 4]
   Fig. 4 is a schematic perspective view showing a glass wound body having a shape of Japanese hand drum.
[Fig. 5]

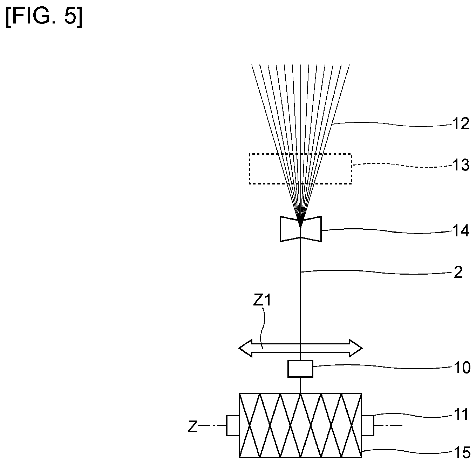

   Fig. 5 is a schematic view for illustrating a method for manufacturing the glass wound body according to the one embodiment of the present invention.

### [Description of Embodiments]

Hereinafter, a description will be given of a preferred embodiment. However, the following embodiment is simply illustrative and the present invention is not limited to the following embodiment. Throughout the drawings, members having substantially the same functions may be referred to by the same reference characters.

### [Glass wound body]

Fig. 1 is a schematic perspective view showing a glass wound body according to one embodiment of the present invention. A glass wound body 1 in Fig. 1 is formed by a single glass strand 2 being wound up about an axis of rotation Z. In this embodiment, a glass direct roving is formed by a single glass strand 2 being directly wound up.

Furthermore, the glass wound body 1 has an approximately cylindrical structure in which the glass strand 2 is wound over and over to form layers in a radial direction. A portion thereof inward of the glass strand 2 is hollow. Alternatively, a core, such as a bobbin, may be disposed in the center of the glass wound body 1.

The glass strand 2 is formed by a plurality of glass filaments being bound together. The plurality of glass filaments are bound together by applying a sizing agent to their surfaces.

Where, to the extent that the glass filaments have a diameter of 28 µm or less, the count of the glass strand is represented by X tex and the diameter of the glass filaments is represented by Y µm, the glass strand 2 satisfies X/Y² > 8.

When the diameter of the glass filaments is the above upper limit or less, deterioration in toughness of the glass filaments can be reduced and, as a result, the glass strand 2 can be made less fractured. Furthermore, when X/Y² > 8 is satisfied, the count of the glass strand 2 can be increased without increasing the diameter of the glass filaments. Therefore, when X/Y² > 8 is satisfied to the extent that the diameter of the glass filaments is 28 µm or less, the thickness of the glass strand 2 can be increased while the handleability of the glass wound body 1 can be increased, and the safety of the glass wound body 1 when handled can be increased. The value of X/Y² is preferably not less than 9, more preferably not less than 10, even more preferably not less than 11, preferably not more than 50, more preferably not more than 30, and even more preferably not more than 25.

The value of X/Y² can be increased, for example, by increasing the number of glass filaments constituting the glass strand 2. Increasing the number of glass filaments tends to make the glass filaments themselves thinner (increasing the number of bushing nozzles tends to make the diameters of the individual bushing nozzles smaller) and, therefore, the handleability can be considered to be increased.

The glass wound body 1 is produced by the glass strand 2 being wound up on a rotating collet. In winding up the glass strand 2, as shown in Fig. 2, the glass strand 2 is wound up while being traversed by moving it back and forth in a widthwise direction of a collet 11 with a traverse 10. In doing so, it is important from the viewpoint of productivity and handleability of the glass wound body 1 to perform the traversing in an appropriate manner. The widthwise direction of the collet 11 is the direction Z1 that is the same direction as the direction of axis of rotation Z.

The inventors have focused on the number of winds as a parameter for appropriately performing the traversing and have found that the productivity and handleability of the glass wound body 1 can be increased by appropriately adjusting the number of winds.

The number of winds is determined by the ratio between the speed of travel of the glass strand 2 in the widthwise direction of the collet 11 (in the direction Z1) and the speed of rotation of the collet 11. More specifically, the number of winds is a value indicating how many times the collet 11 has rotated while the glass strand 2 travels one way in the widthwise direction of the collet 11 (in the direction Z1). The one-way travel corresponds to a single travel from a strand portion corresponding to a first end surface 1a of the glass wound body 1 shown in Fig. 1 to a strand portion corresponding to a second end surface 1b thereof. The number of winds can also be determined by the number of aligned glass strands to the wind order. Hereinafter, a detailed description will be given of the wind order and the number of aligned glass strands with reference to Fig. 3.

Fig. 3 is a schematic plan view for illustrating the wind order and the number of aligned glass strands. Particularly, Fig. 3 shows a schematic plan view of the glass wound body 1 as viewed from the direction of the axis of rotation Z1. All the plurality of dash-double-dot lines in Fig. 3 are circular imaginary lines centered at the axis of rotation Z. The respective imaginary lines pass through Point A, Point B, Point C, Point D, and Point E, respectively. These imaginary lines are imaginary lines showing that the glass strand 2 moves farther away from the axis of rotation Z as it is wound around.

First, the wind order will be described. Assume that the winding of the glass strand 2 is started at Point A in Fig. 3. Point A is located at a portion corresponding to the first end surface 1a shown in Fig. 1. When the glass strand 2 travels one half of a round trip (travels one way) in the axial direction (the direction Z1 in Fig. 2), the glass strand 2 is located at Point B. When the glass strand 2 travels the other half of the round trip in the axial direction, the glass strand 2 is located at Point C. When the glass strand 2 makes another round trip in the axial direction, the glass strand 2 is located at Point D. After making three round trips, the glass strand 2 reaches Point E. Point B is located at a portion corresponding to the second end surface 1b shown in Fig. 1 and Points C to E are located at portions corresponding to the first end surface 1a. Here, assume that when the glass wound body 1 is viewed from the axial direction (the direction Z1 of the axis of rotation), the angle formed between a line passing through an arbitrary point located on the first end surface 1a from the axis of rotation Z and connecting the axis of rotation Z and an outer periphery 3 in the shortest distance and a line passing through another point located on the first end surface 1a or the second end surface 1b from the axis of rotation Z and connecting the axis of rotation Z and the outer periphery 3 in the shortest distance is represented by θ. For example, Fig. 3 shows as θ the angle formed between the line F passing through Point A from the axis of rotation Z and extending to the outer periphery 3 and the line G passing through Point B from the axis of rotation Z and extending to the outer periphery 3. On the other hand, the angle θ formed between the line F passing through Point A from the axis of rotation Z and extending to the outer periphery 3 and a line passing through Point E from the axis of rotation Z and extending to the outer periphery 3 is 0°. The number of one-way travels from the start of winding at Point A until return to Point E where the angle θ reaches 0 is six. Points where θ reaches 0°, such as Point E, are referred to as return points.

The above wind order refers to the number of one-way travels of the glass strand 2 during traveling from the starting point of winding to the first return point where the angle θ reaches 0°. When the winding of the glass strand 2 is not started at the first end surface 1a, a point where the glass strand 2 first has reached the first end surface 1a is considered a starting point of winding of the glass strand 2. In the case of the example shown in Fig. 3, the wind order is six. The return point may be located at a portion corresponding to the second end surface 1b. In this case, the wind order is odd.

The winding-up of the glass strand 2 is performed under certain conditions. Specifically, in winding up the glass strand 2, the speed of travel of the glass strand 2 in the direction Z1 and the speed of rotation of the collet 11 are fixed. Therefore, when an arbitrary point of the glass strand 2 located on the first end surface 1a of the glass wound body 1 is considered a first point, the number of one-way travels of the glass strand 2 from when it starts traveling at the first point as the starting point until it first returns to a point where the angle θ reaches 0° is also equal to the wind order. More specifically, assume that a point located on the first end surface 1a or the second end surface 1b is a second point and the second point is a first return point. In other words, assume that when viewed from the axial direction, the angle θ formed between a line passing through the first point from the axis of rotation Z and connecting the axis of rotation Z and the outer periphery 3 in the shortest distance and a line passing through the second point from the axis of rotation Z and connecting the axis of rotation Z and the outer periphery 3 in the shortest distance is 0°. In the case of the example shown in Fig. 3, the number of one-way travels of the glass strand 2 during traveling from the first point to the second point in the produced glass wound body 1 is six equal to the wind order.

Next, the number of aligned glass strands will be described. The number of aligned glass strands refers to the number of rotations of the glass strand 2 about the axis of rotation Z from the starting point of winding of the glass strand 2 until return to the first return point where the angle θ reaches 0°. When the winding of the glass strand 2 is not started at the first end surface 1a, a point where the glass strand 2 first has reached the first end surface 1a is considered a starting point of winding of the glass strand 2. One rotation of the glass strand 2 refers to a rotation thereof through 360° about the axis of rotation Z.

As thus far described, the wind order refers to the number of one-way travels of the glass strand 2 during traveling from the starting point of winding to the first return point where the angle θ reaches 0°. Hereinafter, the wind order is represented by T.

Furthermore, the number of aligned glass strands refers to the number of rotations of the glass strand 2 about the axis of rotation Z during traveling from the starting point of winding of the glass strand 2 to the first return point where the angle θ reaches 0°. Hereinafter, the number of aligned glass strands is represented by N.

In light of the foregoing, the number of winds can be determined by N/T (the ratio of the number of aligned glass strands to the wind order).

In this embodiment, by setting the number of winds to 2.0 ≤ N/T ≤ 5.5, traversing can be appropriately performed, thus increasing the productivity and handleability of the glass wound body 1.

Specifically, by setting the number of winds to 2.0 ≤ N/T ≤ 5.5, the glass strand can be wound up into a desired shape, such as a square-end cheese shape. Furthermore, in drying the glass wound body 1, the glass wound body 1 is less likely to be collapsed in shape even if moisture contained in the glass wound body 1 has evaporated. Moreover, in reeling the glass strand 2 out of the glass wound body 1, the glass wound body 1 can be easily unwound from the inner layers thereof and curling of the glass strand 2 can be reduced. In addition, the width of dispersion of the glass strand 2 when a predetermined external force is applied thereto can be substantially evened out.

The wind order T is, for example, not less than 10 and not more than 23, preferably not less than 11 and not more than 19, and more preferably not less than 13 and not more than 17. The number of aligned glass strands N is, for example, not less than 20 and not more than 110, preferably not less than 30 and not more than 90, and more preferably not less than 50 and not more than 70.

In the present invention, when the glass strand 2 is thick, the number of winds is preferably 2.0 ≤ N/T ≤ 4.5, more preferably 2.0 ≤ N/T ≤ 4.0, even more preferably 2.0 ≤ N/T ≤ 3.5, and particularly preferably 2.0 ≤ N/T ≤ 2.5. In this case, the productivity and handleability of the glass wound body 1 can be further increased.

On the other hand, when the glass strand 2 is thin, the number of winds is preferably 3.0 ≤ N/T ≤ 5.5, more preferably 3.5 ≤ N/T ≤ 5.5, even more preferably 4.0 ≤ N/T ≤ 5.5, particularly preferably 4.5 ≤ N/T ≤ 5.5, and most preferably 5.0 ≤ N/T ≤ 5.5. In this case, the productivity and handleability of the glass wound body 1 can be further increased.

In producing the glass wound body 1, the glass strand 2 becomes thicker as the wind-up speed (spinning speed) of molten glass decreases. On the other hand, the glass strand 2 becomes thinner as the wind-up speed (spinning speed) of molten glass increases.

When, in the above condition, the glass strand 2 is thick and the wind-up speed is low, excessively increasing the number of winds makes it less likely that an appropriate tension is applied to the glass strand 2 and, therefore, makes it likely that a loosely glass wound body 1 is obtained. In this case, during carriage of the glass wound body 1, finger marks or jig marks easily remain, which may lead to shape defects. Therefore, when the glass strand 2 is thick, the number of winds is preferably set to be relatively low as described above.

On the other hand, when the glass strand 2 is thin and the wind-up speed is high, excessively decreasing the number of winds makes it likely that an excessive tension is applied to the glass strand 2, which may cause the glass strand 2 reeled out of the glass wound body 1 to have quality defects, such as production of a large amount of fuzz. In addition, the glass wound body 1 may cause shape defects, such as a Japanese hand drum shape as shown in Fig. 4. Therefore, when the glass strand 2 is thin, the number of winds is preferably set to be relatively high as described above.

When the glass strand 2 is thick, the count of the glass strand 2 is, for example, not less than 4000 tex and not more than 14000 tex, preferably not less than 4800 tex and not more than 14000 tex, and more preferably not less than 9200 tex and not more than 14000 tex. The diameter of the glass filaments constituting the glass strand 2 is, for example, not less than 17 µm and not more than 28 µm, preferably not less than 20 µm and not more than 28 µm, and more preferably not less than 24 µm and not more than 28 um.

On the other hand, when the glass strand 2 is thin, the count of the glass strand 2 is, for example, not less than 1200 tex and less than 4000 tex, and more preferably not less than 1200 tex and not more than 2400 tex. The diameter of the glass filaments constituting the glass strand 2 is, for example, not less than 10 µm and not more than 17 µm, more preferably not less than 12 µm and not more than 17 µm, and even more preferably not less than 14 µm and not more than 17 um.

The count of the glass strand 2 can be adjusted by the diameter of the glass filaments, the number of glass filaments, and the composition of the glass filaments. The diameter of the glass filaments can be adjusted, for example, by changing, in a manufacturing method to be described hereinafter, the viscosity of molten glass, the wind-up speed during winding or so on.

The thickness of the glass strand 2 remains substantially unchanged between before and after the drying of the sizing agent. Therefore, the count of the glass strand 2 can be applied to both the glass strand 2 before the drying of the sizing agent and that after the drying of the sizing agent.

In this embodiment, the height of the glass wound body 1 is a dimension of the glass wound body 1 along the direction Z1 of the axis of rotation. Where the height of the glass wound body 1 is represented by H mm and the strand width of the glass strand 2 is represented by W mm, H ≥ W × N is preferably satisfied. The variable N refers to the number of aligned glass strands described previously. When H ≥ W × N is satisfied, inconveniences, such as shape defects of the glass wound body 1 and protrusion of the glass strand 2 from the first end surface 1a or the second end surface 1b, can be further reduced.

The height H of the glass wound body 1 can be, for example, in a range of not less than 80 mm and not more than 350 mm. The inner diameter of the glass wound body 1 can be, for example, in a range of not less than 100 mm and not more than 250 mm. The outer diameter of the glass wound body 1 can be, for example, in a range of not less than 260 mm and not more than 300 mm.

The strand width W of the glass strand 2 may be, for example, in a range of not less than 2.0 mm and not more than 11.0 mm and is preferably not less than 3.5 mm and not more than 10.5 mm, more preferably not less than 3.5 mm and not more than 9.0 mm, and even more preferably not less than 4.0 mm and not more than 5.5 mm.

As thus far described, in this embodiment, where, to the extent that the glass filaments have a diameter of 28 µm or less, the count of the glass strand 2 is represented by X tex and the diameter of the glass filaments 2 is represented by Y µm, X/Y² > 8 is satisfied. Therefore, the count of the glass strand 2 can be increased without increasing the diameter of the glass filaments. Furthermore, even when the count of the glass strand 2 is increased, the productivity and handleability of the glass wound body 1 can be increased by setting the number of winds (N/T) to an appropriate value.

### [Manufacturing Method of Glass wound body]

Hereinafter, a description will be given of a method for manufacturing a glass wound body 1 with reference to Fig. 5.

First, a plurality of glass filaments 12 shown in Fig. 5 are formed. More specifically, a glass raw material injected into a glass melting furnace is melted to form molten glass. The molten glass is made homogeneous and then extruded from thermally resistant nozzles attached to a bushing. Thereafter, the extruded molten glass is cooled to form a plurality of glass filaments (monofilaments) 12. For example, a platinum-made bushing can be used as the bushing.

The composition of the glass filaments 12 is not particularly limited and, for example, E-glass, S-glass, D-glass, AR-glass or the like can be used. Of these glasses, E-glass is preferred because it is inexpensive and can further increase the mechanical strength of a composite material obtained by combining it with resin. Furthermore, S-glass is also preferred because it can still further increase the mechanical strength of a composite material.

The number of glass filaments 12 is not particularly limited, but is preferably not less than 2000, more preferably not less than 4000, even more preferably not less than 4001, particularly preferably not less than 4500, preferably not more than 10000, and more preferably not more than 8000. When the number of glass filaments 12 is the above lower limit or more, the thickness of the glass strand 2 can be further increased. Furthermore, the mechanical strength of a composite material obtained by combination with resin can be further increased. When the number of glass filaments 12 is the above upper limit or less, the glass filaments 12 can be more easily made uniform in length.

Next, a sizing agent is applied to the surfaces of the plurality of obtained glass filaments 12 with a sizing agent application mechanism 13. With the sizing agent applied uniformly to the glass filaments 12, the plurality of glass filaments 12 are put together and bundled. The plurality of glass filaments 12 can be put together and bundled, for example, by a gathering shoe 14. Thus, a glass strand 2 is formed.

The sizing agent may contain a thermoplastic resin, such as, for example, polypropylene resin, nylon resin, polyvinyl acetate or polyphenylene sulfide resin. Alternatively, the sizing agent may contain a thermosetting resin, such as polyester (unsaturated polyester) resin, epoxy resin or polyurethane resin. The sizing agent may contain respective components of a lubricant, a non-ionic surfactant, an antistat or so on. The composition ratio of these components can be appropriately set as necessary.

Next, the glass strand 2 is wound up, for example, using a collet 11 while being traversed by moving it back and forth in the direction Z1 of the axis of rotation with a traverse 10, thus making a wound package 15. In winding up the glass strand 2, for example, a collet 11 with a diameter of 100 mm to 250 mm can be used. The diameter of the collet 11 is preferably not more than 200 mm and more preferably not more than 150 mm.

The winding thickness of the glass strand 2 in the wound package 15 is preferably not less than 60 mm and preferably not more than 65 mm. When the winding thickness of the glass strand 2 in the wound package 15 is in the above range, the glass strand 2 can be more evenly thermally dried from its winding start portion to winding end portion.

Next, the sizing agent is thermally dried to evaporate its moisture, thus forming a film on the surfaces of the glass filaments 12. As a method for thermal drying, for example, hot-air drying or dielectric drying can be used. The thermal drying can be performed, for example, for an hour to 24 hours in a temperature range of 100°C to 150°C. Thus, a glass wound body 1 can be obtained.

Hot-air drying is preferably used as the thermal drying. In this case, the glass strand 2 can be more evenly thermally dried from its winding start portion to winding end portion. Hot-air drying is preferred because it is easier and more certain to keep the sizing agent in a given temperature range. However, hot-air dying and dielectric drying may be used in combination.

In the manufacturing method according to this embodiment, for winding-up into the glass wound body 1, the number of winds is set to 2.0 ≤ N/T ≤ 5.5. Thus, the traversing can be appropriately performed and the productivity and handleability of the glass wound body 1 can be increased.

The glass wound body 1 produced in the above manner includes a glass strand wound up in a roll shape (a winding shape) and can be stored in this shape and used in this shape as necessary. For the purposes of dust prevention, antifouling, protection of fiber surfaces, and so on, the glass wound body 1 of a glass strand wound up in a winding shape is stored wrapped in a wrapping manner depending on the intended use with an organic film material, for example, shrink wrapping or wrapping with stretch film. Glass wound bodies 1 may be stored in a multiply stacked state.

The glass strand 2 drawn from the glass wound body 1 can be mixed with a resin to make a composite material. Hereinafter, a description will be given of a method for making a composite material by the pultrusion method.
First, the glass strand 2 drawn from the glass wound body 1 is impregnated with a resin, thus obtaining a resin-impregnated glass strand. Specifically, the glass strand 2 drawn from the glass wound body 1 is immersed into a molten resin and then cooled to solidify the molten resin, thus obtaining a resin-impregnated glass strand. The obtained resin-impregnated glass strand is chopped, thus obtaining a composite material in the form of pellets. By injection molding the obtained composite material in the form of pellets, a glass fiber-reinforced resin molded body having a desired shape can be obtained.

The present invention will be described below in further detail with reference to specific examples. The present invention is not at all limited by the following examples and modifications and variations may be appropriately made therein without changing the gist of the invention.

### (Examples 1 to 12 (Ex. 1-12) and Comparative Examples 1 to 7 (CEx. 1-7))

First, molten glass having a composition of E-glass was drawn from a bushing, thus obtaining a plurality of glass filaments. Next, a sizing agent was applied to the surfaces of the obtained glass filaments with an applicator after being controlled to give an ignition loss of 0.3% by mass to 1% by mass, and these glass filaments were gathered to obtain a glass strand. The obtained glass strand was wound up on a collet having a diameter of 150 mm while being traversed by moving it back and forth in the axial direction with a traverse, thus making a wound package. Next, the produced wound package was thermally dried in a hot-air drying oven at 150°C for 720 minutes, thus obtaining a glass wound body.

In each of the Examples and Comparative Examples, the count (X) of the glass strand, the diameter (Y) of the glass filaments, X/Y², the winding height (H) of the glass wound body, and the strand width (W) of the glass strand are as shown in Table 1 below. Furthermore, in each of the Examples and Comparative Examples, in winding up the glass strand, the number of aligned glass strands (N) of the glass strand, the wind order (T), and the number of winds (N/T) were set as shown in Table 1 below.

The glass wound bodies obtained in Examples and Comparative Examples were evaluated in terms of winding shape based on the following evaluation criteria. The results are shown in Table 1 below.

### <Evaluation Criteria>

O ... A glass wound body in a desired square-end cheese shape could be obtained.
X ... A glass wound body in a desired square-end cheese shape could not be obtained.

**[Table 1]**

| | Count (X) /tex | Diameter (Y) / µm | X/Y₂ | Number of Glass Filaments | Number of Aligned Turns (N) | Number of Returns (T) | N/T | Winding Height (H) / mm | Strand Width (W) / mm | Winding Shape | Comments |
|---|---|---|---|---|---|---|---|---|---|---|---|
| Ex.1 | 9200 | 24 | 16.0 | 8000 | 35 | 13 | 2.69 | 325 | 8.2 | O | No particular problem |
| Ex.2 | 4800 | 17 | 16.6 | 8000 | 43 | 15 | 2.87 | 325 | 5.5 | O | No particular problem |
| Ex.3 | 2400 | 17 | 8.3 | 4000 | 70 | 13 | 5.38 | 325 | 3.5 | O | No particular problem |
| Ex.4 | 4800 | 24 | 8.3 | 4000 | 70 | 15 | 4.67 | 325 | 4.5 | O | No particular problem |
| Ex.5 | 14000 | 26 | 20.7 | 10000 | 35 | 13 | 2.69 | 325 | 10.5 | O | No particular problem |
| Ex.6 | 14000 | 26 | 20.7 | 10000 | 31 | 13 | 2.38 | 325 | 10.5 | O | No particular problem |
| Ex.7 | 1620 | 11 | 13.4 | 6000 | 70 | 13 | 5.38 | 325 | 2.5 | O | No particular problem |
| Ex.8 | 2200 | 13 | 13.0 | 6000 | 70 | 13 | 5.38 | 325 | 3.0 | O | No particular problem |
| Ex.9 | 3500 | 17 | 12.1 | 6000 | 70 | 13 | 5.38 | 325 | 3.7 | O | No particular problem |
| Ex.10 | 1250 | 11 | 10.3 | 5000 | 70 | 13 | 5.38 | 325 | 3.5 | O | No particular problem |
| Ex.1 1 | 1750 | 13 | 10.4 | 5000 | 70 | 13 | 5.38 | 325 | 2.2 | O | No particular problem |
| Ex.12 | 3000 | 17 | 10.4 | 5000 | 70 | 13 | 5.38 | 325 | 3.5 | O | No particular problem |
| Comp.Ex.1 | 9200 | 24 | 16.0 | 8000 | 65 | 11 | 5.91 | 325 | 7.5 | × | Hardness of glass wound body itself was low. |
| Comp.Ex.2 | 4800 | 17 | 16.6 | 8000 | 80 | 13 | 6.15 | 325 | 5.1 | × | Traverse miss occurred because glass strand was not under tension. |
| Comp.Ex.3 | 2400 | 17 | 8.3 | 4000 | 80 | 11 | 7.27 | 325 | 3.5 | × | Glass strand protruding in loop shape from end surface was found. |
| Comp.Ex.4 | 4800 | 24 | 8.3 | 4000 | 70 | 11 | 6.36 | 325 | 5.1 | × | Traverse miss occurred because glass strand was not under tension. |
| Comp.Ex.5 | 14000 | 28.9 | 16.8 | 8000 | 23 | 13 | 1.77 | 325 | 9.8 | O | Glass filaments lost toughness and were easily fractured. |
| Comp.Ex.6 | 1200 | 17 | 4.2 | 2000 | 35 | 13 | 2.69 | 250 | 2.3 | × | Glass wound body was in Japanese hand drum shape. |
| Comp.Ex.7 | 530 | 9 | 6.5 | 3300 | 69.5 | 13 | 5.35 | 250 | 1.5 | × | Glass wound body was in Japanese hand drum shape. |

As is obvious from Table 1, the glass wound bodies in Examples 1 to 12 had excellent productivity and handleability. On the other hand, the glass wound bodies in Comparative Examples 1 to 4 and 6 to 7 could not obtain a desired winding shape and had problems with productivity and handleability as described in Comments. In Comparative Example 5, a desired winding shape was obtained, but a problem with handleability occurred as described in Comments.

### [Reference Signs List]

- 1: glass wound body
- 1a, 1b: first and second end surfaces
- 2: glass strand
- 3: outer periphery
- 10: traverse
- 11: collet
- 12: glass filament
- 13: sizing agent application mechanism
- 14: gathering shoe
- 15: wound package

## Claims

1. A glass wound body formed by a single glass strand being wound up about an axis of rotation,
wherein where, in a range in which glass filaments constituting the glass strand have a diameter of 28 µm or less, a count of the glass strand is represented by X tex and a diameter of the glass filaments is represented by Y µm, X/Y² > 8 is satisfied,
wherein where, as viewed from a direction of the axis of rotation, an angle formed between a line connecting the axis of rotation and a starting point of winding of the glass strand and a line connecting the axis of rotation and a point where the glass strand is located after start of the winding is represented by θ, where a single travel of the glass strand for a distance of a line connecting both ends of the glass wound body in the direction of the axis of rotation is referred to as a one-way travel, and
where, during traveling of the glass strand from the starting point of winding to a first return point at which the angle θ reaches 0°, a number of the one-way travels of the glass strand is represented by T and a number of rotations of the glass strand about the axis of rotation is represented by N,
2.0 ≤ N/T ≤ 5.5 is satisfied.

2. The glass wound body according to claim 1, wherein where a height of the glass wound body in the direction of the axis of rotation is represented by H mm and a strand width of the glass strand is represented by W mm, H ≥ W × N is satisfied.

3. The glass wound body according to claim 1 or 2,
wherein the diameter of the glass filaments is not less than 17 µm and not more than 28 um.

4. The glass wound body according to claim 1 or 2,
wherein the count of the glass strand is not less than 3000 tex and not more than 14000 tex.

5. The glass wound body according to claim 3, wherein 2.0 ≤ N/T ≤ 4.0 is satisfied.

6. The glass wound body according to claim 4, wherein 2.0 ≤ N/T ≤ 4.0 is satisfied.

7. A method for manufacturing a glass wound body formed by a single glass strand being wound up about an axis of rotation, the method comprising the steps of:
applying a sizing agent to surfaces of a plurality of glass filaments to bundle the plurality of glass filament together and thus form a glass strand;
winding up the glass strand while traversing the glass strand by moving the glass strand back and forth in a direction of extension of the axis of rotation and thus making a wound package; and
drying the sizing agent to form a film on the surfaces of the glass filaments,
wherein where, in a range in which glass filaments constituting the glass strand have a diameter of 28 µm or less, a count of the glass strand is represented by X tex and a diameter of the glass filaments is represented by Y µm, X/Y² > 8 is satisfied, and
wherein in the step of making the wound package,
where, as viewed from the direction of the axis of rotation, an angle formed between a line connecting the axis of rotation and a starting point of winding of the glass strand and a line connecting the axis of rotation and a point where the glass strand is located after start of the winding is represented by θ, where a single travel of the glass strand for a distance of a line connecting both ends of the glass wound body in the direction of the axis of rotation is referred to as a one-way travel, and,
where, during traveling of the glass strand from the starting point of winding to a first return point at which the angle θ reaches 0°, a number of the one-way travels of the glass strand is represented by T and a number of rotations of the glass strand about the axis of rotation is represented by N,
the glass strand is wound up to satisfy 2.0 ≤ N/T ≤ 5.5.

8. A method for manufacturing a composite material of the glass strand and a resin using the glass wound body according to claim 1, the method comprising the steps of:
impregnating the glass strand drawn from the glass wound body with a resin to obtain a resin-impregnated glass strand; and
cutting the resin-impregnated glass strand.
